# FASCICULE DE BREVET EUROPEEN

(11) **EP 3 082 533 B1**
(45) Date de publication et mention de la délivrance du brevet: **27.06.2018**
(21) Numéro de dépôt: 14830987.5
(22) Date de dépôt: 19.12.2014
(51) Int. Cl.: A47J 43/25

(54) **DISPOSITIF DE FRAGMENTATION D'ALIMENTS ET D'EJECTION D'ALIMENTS FRAGMENTES**
VORRICHTUNG ZUR FRAGMENTIERUNG VON NAHRUNG UND ZUM AUSWERFEN VON FRAGMENTIERTER NAHRUNG
DEVICE FOR FRAGMENTING FOOD AND EJECTING FRAGMENTED FOOD

(30) Priorité: 20.12.2013 FR 1363353
(43) Date de publication de la demande: 26.10.2016
(73) Titulaire: SEB S.A., 69130 Ecully (FR)
(72) Inventeur: LAFOND, Jean-Marie, F-65420 Ibos (FR); PEYRAS, Lionel, F-65100 Lourdes (FR)
(74) Mandataire: Cémeli, Eric Philippe Laurent
(86) Numéro de dépôt international: PCT/FR2014/053463
(87) Numéro de publication internationale: WO 2015/092326

(56) Documents cités:
- EP-A1- 2 438 841
- WO-A1-2007/096514
- WO-A1-2012/045961
- FR-A1- 2 929 093

## Description

La présente invention concerne le domaine technique des dispositifs de préparation d'aliments comportant un outil de travail rotatif de type tambour pour fragmenter progressivement les aliments.

La présente invention concerne plus particulièrement, mais non exclusivement, les appareils électroménagers de préparation culinaire comportant un boîtier motorisé portant un accessoire amovible formant un dispositif de préparation d'aliments du type précité. La présente invention concerne également les accessoires amovibles du type précité.

Il est connu d'utiliser des outils de travail de type tambour cylindrique ou tronconique pour effiler ou pour émincer les aliments. Plusieurs dispositions ont été proposées pour faciliter l'éjection des aliments découpés par des outils de travail du type précité. Le document KR20020063643 relatif à un appareil comportant un outil de travail de type tambour cylindrique propose d'agencer dans l'outil de travail un insert présentant une pente de déversement en direction de l'ouverture de sortie de l'outil de travail. Le document WO 2004/012915 propose un insert de construction similaire, comportant des organes de coupe additionnels pour recouper les aliments découpés par l'outil de travail. Le document WO 2007/096514 propose un insert présentant une pente de déversement avec un bord latéral permettant de racler la paroi interne de l'outil de travail. Le document WO 2012/017153 propose un insert comportant des organes de coupe additionnels pour recouper les aliments découpés par l'outil de travail, ainsi qu'une paroi inférieure ajourée pour éjecter les aliments découpés sous l'effet de la rotation de l'outil de travail.

Usuellement les outils de travail du type précité sont utilisés avec des aliments présentant une certaine ténacité, tels que notamment les carottes, les concombres ou encore les fromages à pâte dure. Les outils de travail du type précité permettent de découper des tranches ou des filaments d'aliments selon l'outil de travail utilisé. Les morceaux d'aliments découpés peuvent se fragmenter encore mais restent de nature essentiellement solide.

La transformation d'aliments plus malléables, tels que par exemple les pommes de terre cuites, ne donne toutefois pas entière satisfaction avec les dispositifs précités. En effet, certaines variétés de pommes de terre, notamment les pommes de terre à purée, ont tendance à se désagréger assez facilement après cuisson. La pression du poussoir dans la cheminée d'introduction suffit pour écraser la pomme de terre cuite contre l'outil de travail. L'action ultérieure de l'outil de travail produit une purée qui a davantage le comportement d'un fluide visqueux que de morceaux d'aliments solides. L'éjection des aliments ainsi transformés est peu satisfaisante, même avec des inserts d'éjection tels que précédemment décrits. De plus, la faible ténacité de la pomme de terre cuite favorise l'obtention d'un débit de transformation élevé, qui contribue à engorger l'intérieur du tambour.

Un objet de la présente invention est de proposer un dispositif de préparation d'aliments utilisant un outil de travail rotatif de type tambour, qui soit bien adapté à la transformation d'aliments cuits et/ou mous tels que notamment les pommes de terre cuites ou la chair d'avocat, pour obtenir une préparation de type purée, tout en offrant une utilisation simple.

Un autre objet de la présente invention est de proposer un dispositif de préparation d'aliments utilisant un outil de travail rotatif de type tambour, qui soit bien adapté à la transformation d'aliments cuits et/ou mous tels que notamment les pommes de terre cuites ou la chair d'avocat, pour obtenir une préparation de type purée, tout en offrant un nettoyage aisé.

Un autre objet de la présente invention est de proposer un dispositif de préparation d'aliments utilisant un outil de travail rotatif de type tambour, qui soit bien adapté à la transformation d'aliments cuits et/ou mous tels que notamment les pommes de terre cuites ou la chair d'avocat, pour obtenir une préparation de type purée, tout en offrant une construction économique.

Ces objets sont atteints avec un dispositif de préparation d'aliments comprenant :
- un outil de travail rotatif comportant une extrémité d'entraînement et une paroi latérale issue de l'extrémité d'entraînement, la paroi latérale présentant au moins un organe de fragmentation externe adjacent à un passage traversant, la paroi latérale présentant une bordure circonférentielle ménageant une ouverture frontale pour l'évacuation des aliments transformés,
- un boîtier définissant un logement présentant une ouverture de montage pour la mise en place de l'outil de travail dans le logement, le boîtier présentant une cheminée pour l'introduction des aliments à transformer, la cheminée débouchant dans le logement au moins partiellement en regard du ou de l'un au moins des organes de fragmentation externes,
- un insert porté par le boîtier, l'insert présentant un passage d'évacuation prolongé par une paroi déflectrice s'étendant à l'intérieur de la paroi latérale,
du fait que l'insert présente au moins un autre passage d'évacuation prolongé par une autre paroi déflectrice s'étendant à l'intérieur de la paroi latérale. Cette disposition permet d'accompagner les aliments transformés en purée vers les passages d'évacuation. La présence des parois déflectrices évite que les aliments soient entraînés en rotation à l'intérieur de l'outil de travail et contribue à leur évacuation. Cette disposition permet ainsi de canaliser les préparations obtenues à partir d'aliments cuits et/ou mous tels que notamment les pommes de terre ou la chair d'avocat et de favoriser leur éjection hors du dispositif de préparation d'aliments. Un tel dispositif est particulièrement simple à réaliser et à utiliser.

Avantageusement alors, la paroi déflectrice et la ou les autres parois déflectrices ménagent avec la paroi latérale plusieurs canaux d'évacuation distincts débouchant chacun dans l'un des passages d'évacuation. Cette disposition permet une collecte efficace des aliments transformés en purée et contribue à une meilleure évacuation.

Avantageusement encore, l'insert présente un noyau central s'étendant selon l'axe de rotation de l'outil de travail, à partir duquel s'étendent la paroi déflectrice et la ou les autres parois déflectrices. Cette disposition permet une répartition plus équilibrée des passages d'évacuation autour de l'axe de rotation.

Avantageusement encore, la paroi déflectrice et la ou les autres parois déflectrices sont vrillées dans le sens de rotation de l'outil de travail en direction de l'ouverture frontale. Cette disposition contribue également à faciliter l'évacuation des aliments transformés en purée.

Avantageusement alors, la paroi déflectrice est vrillée dans le sens de rotation de l'outil de travail en direction de l'ouverture frontale. Cette disposition contribue également à faciliter l'évacuation des aliments transformés en purée.

Avantageusement encore, la paroi déflectrice s'étend à l'intérieur de la paroi latérale sur au moins la moitié de la longueur de la paroi latérale. Cette disposition permet une meilleure évacuation des aliments transformés en purée. Si désiré, la ou les autres parois déflectrices s'étendent à l'intérieur de la paroi latérale sur au moins la moitié de la longueur de la paroi latérale.

Avantageusement encore, la paroi déflectrice s'étend à l'intérieur de la paroi latérale en dessous du débouché de la cheminée dans le logement. Cette disposition permet de collecter les aliments transformés en purée dès leur entrée à l'intérieur de la paroi latérale de l'outil de travail. Si désiré, la ou au moins l'une des autres parois déflectrices s'étend à l'intérieur de la paroi latérale en dessous du débouché de la cheminée dans le logement.

Avantageusement encore, la paroi déflectrice présente un bord latéral adjacent à la paroi latérale. Cette disposition permet une meilleure évacuation des aliments transformés en purée. Si désiré, la ou chaque autre paroi déflectrice présente un bord latéral adjacent à la paroi latérale.

Avantageusement alors, le ou chaque bord latéral est fuyant en direction de l'ouverture frontale par rapport au sens de rotation de l'outil de travail. Cette disposition permet de faciliter l'évacuation des aliments transformés en purée.

Avantageusement encore, le ou chaque bord latéral présente au moins une échancrure. Cette disposition permet le passage de protubérances internes de l'outil de travail en limitant le jeu des bords latéraux avec la paroi latérale de l'outil de travail, ce qui contribue à l'efficacité de l'évacuation des aliments transformés en purée.

Selon une forme de réalisation avantageuse, l'insert comporte une bordure annulaire montée autour de l'ouverture de montage. Le ou chacun des passages d'évacuation forme ainsi une ouverture d'évacuation. Cette disposition permet de mieux canaliser les aliments par le ou les passages d'évacuation.

Avantageusement encore, la bordure annulaire forme une couronne extérieure déformable élastiquement pour venir en prise sur le boîtier autour de l'ouverture de montage. Une telle disposition est simple à réaliser et à utiliser. En variante, la bordure annulaire pourrait notamment être assemblée par vissage ou par baïonnette avec le boîtier. En alternative, l'insert pourrait notamment être monté sur le boîtier par clipsage ou par encliquetage.

Avantageusement encore, l'insert comporte une couronne interne s'étendant à l'intérieur de l'ouverture de montage. Cette disposition permet notamment de retenir l'outil de travail dans le logement.

Avantageusement alors, la couronne interne s'étend en regard de la bordure circonférentielle. Cette disposition permet de bien canaliser les aliments transformés en purée vers les passages d'évacuation.

Selon une forme de réalisation avantageuse, l'outil de travail rotatif est tronconique. Cette disposition contribue à faciliter l'évacuation des aliments.

Selon une forme de réalisation avantageuse, l'outil de travail présente une pluralité d'organes de fragmentation externes présentant chacun un bord d'attaque proéminent s'élevant à partir d'une partie postérieure du passage traversant par rapport au sens de rotation de l'outil de travail. Une telle disposition permet une construction simple à réaliser, qui autorise une grande densité d'organes de fragmentation externes. Un dispositif de préparation d'aliments particulièrement efficace peut ainsi être obtenu.

Avantageusement encore, le dispositif de préparation d'aliments comporte un poussoir pouvant être déplacé dans la cheminée pour pousser les aliments vers l'outil de travail. Cette disposition contribue également à augmenter le rendement et la vitesse d'extraction.

Selon une forme de réalisation avantageuse permettant de réaliser un accessoire amovible susceptible d'être monté sur un boîtier motorisé, le boîtier porte un organe de transmission monté libre en rotation, et l'extrémité d'entraînement de l'outil de travail monté dans le logement vient en prise avec l'organe de transmission pour entraîner en rotation l'outil de travail. En alternative l'organe de transmission peut notamment être remplacé par un arbre d'entraînement issu d'une motorisation portée par le boîtier.

Ces objets sont atteints également avec un appareil électroménager de préparation d'aliments comprenant une base motorisée et un accessoire de travail solidaire de la base motorisée, l'accessoire de travail comportant :
- un outil de travail rotatif comportant une extrémité d'entraînement et une paroi latérale issue de l'extrémité d'entraînement, la paroi latérale présentant au moins un organe de fragmentation externe adjacent à un passage traversant, la paroi latérale présentant une bordure circonférentielle ménageant une ouverture frontale pour l'évacuation des aliments transformés,
- un boîtier définissant un logement présentant une ouverture de montage pour la mise en place de l'outil de travail dans le logement, le boîtier présentant une cheminée pour l'introduction des aliments à transformer, la cheminée débouchant dans le logement au moins partiellement en regard du ou de l'un au moins des organes de fragmentation externes,
- un insert porté par le boîtier, l'insert présentant un passage d'évacuation prolongé par une paroi déflectrice s'étendant à l'intérieur de la paroi latérale,
du fait que l'accessoire de travail forme un dispositif de préparation d'aliments selon l'une au moins des caractéristiques précitées.

L'invention sera mieux comprise à l'étude d'un exemple de réalisation et de variantes, pris à titre nullement limitatif, l'exemple de réalisation étant illustré dans les figures annexées, dans lesquelles :
- la figure 1 est une vue en perspective et en éclaté d'un exemple de réalisation d'un appareil électroménager de préparation d'aliments comportant une base motorisée et un accessoire de travail amovible formant un dispositif de préparation selon l'invention,
- la figure 2 est une vue en perspective assemblée de l'accessoire de travail amovible et de la base motorisée de l'exemple de réalisation illustré sur la figure 1,
- la figure 3 est une vue en élévation et en coupe de l'accessoire de travail amovible et de la base motorisée assemblés illustrés sur la figure 2,
- la figure 4 est une vue en perspective arrière d'un outil de travail rotatif appartenant au dispositif de préparation selon l'invention illustré sur les figures 1 à 3,
- la figure 5 est une vue agrandie en perspective d'une partie de l'outil de travail rotatif illustré sur la figure 4,
- la figure 6 est une vue en perspective avant de l'outil de travail rotatif illustré sur les figures 4 et 5 appartenant au dispositif de préparation selon l'invention illustré sur les figures 1 à 3,
- la figure 7 est une vue en perspective avant d'un insert appartenant au dispositif de préparation selon l'invention illustré sur les figures 1 à 3,
- la figure 8 est une vue en perspective de trois quarts avant de l'insert illustré sur la figure 7 appartenant au dispositif de préparation selon l'invention illustré sur les figures 1 à 3,
- la figure 9 est une vue en perspective de trois quarts arrière de l'insert illustré sur les figures 7 et 8 appartenant au dispositif de préparation selon l'invention illustré sur les figures 1 à 3,
- la figure 10 est une vue de face de l'accessoire de travail illustré sur les figures 2 et 3.

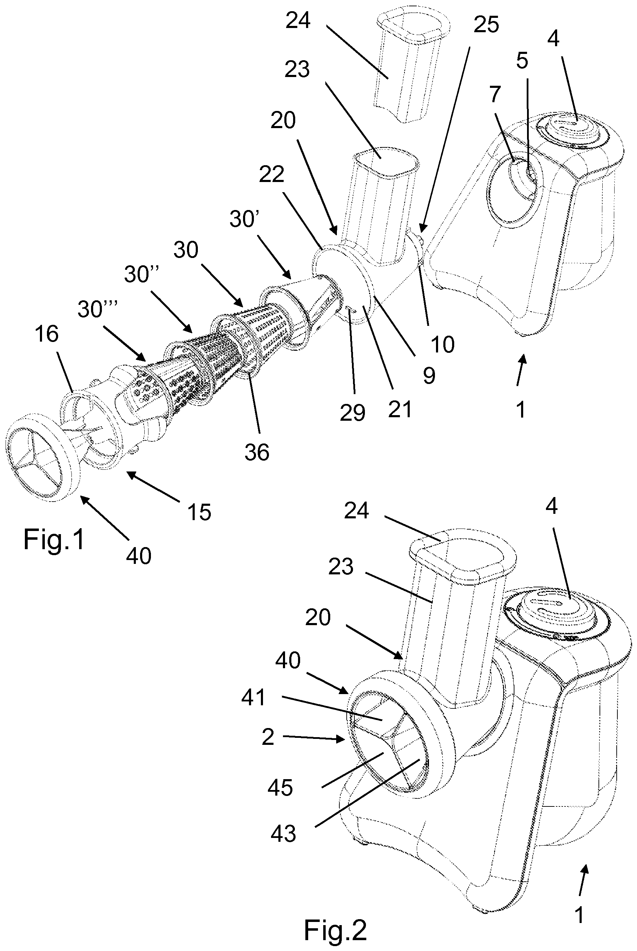

L'appareil électroménager de préparation d'aliments illustré sur les figures 1 à 3 comprend une base motorisée 1 et un accessoire de travail 2 amovible comportant plusieurs outils de travail 30, 30', 30", 30'" rotatifs interchangeables.

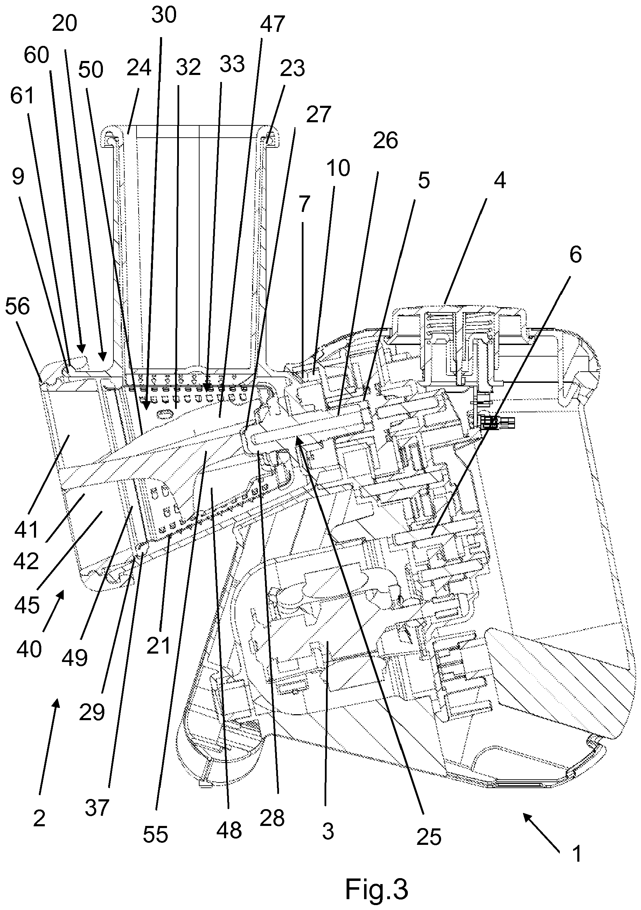

Tel que visible sur la figure 3, la base motorisée 1 loge un moteur électrique 3 piloté par un dispositif de commande 4. Le moteur électrique 3 est relié à une sortie d'entrainement 5 si désiré par l'intermédiaire d'un dispositif de transmission 6. Le dispositif de transmission 6 peut comporter un réducteur. La vitesse de rotation de la sortie d'entraînement 5 peut être variable. De préférence, la vitesse de rotation de la sortie d'entraînement 5 se situe et/ou est incluse dans la plage de vitesses comprise entre 100 et 200 t/min.

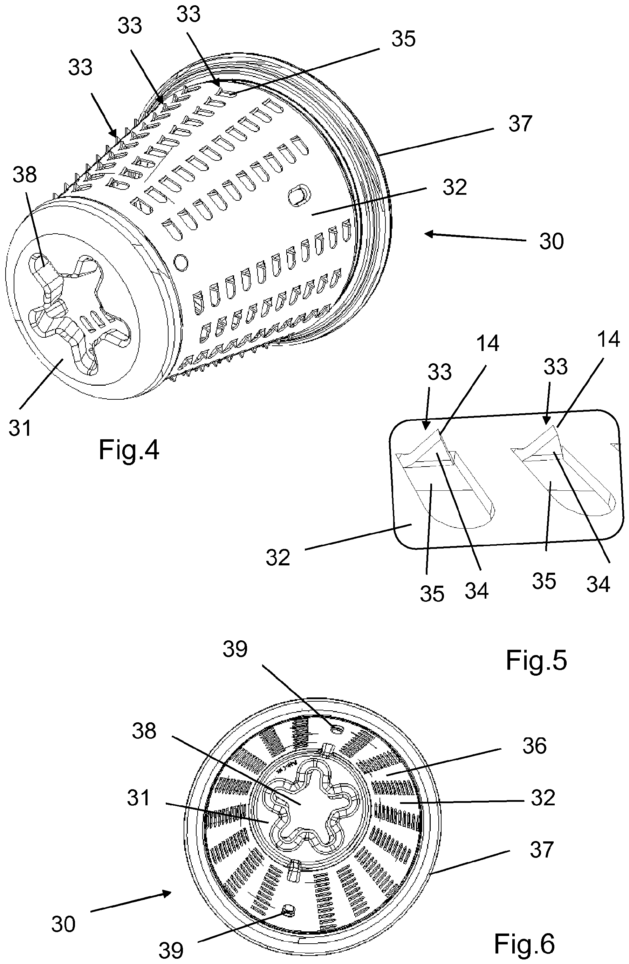

L'accessoire de travail 2 comporte un boîtier 20, un poussoir 24, les outils de travail 30, 30', 30", 30'" rotatifs interchangeables, un capot de rangement 15 et un insert 40 dont la fonction sera précisée ultérieurement. Les outils de travail 30, 30', 30", 30'" rotatifs sont tronconiques et peuvent être maintenus en configuration empilée par le capot de rangement 15 monté sur le boîtier 20. L'outil de travail 30 est un outil de type « reibekuchen » qui sera décrit plus loin en référence aux figures 4 à 6. L'outil de travail 30' est un outil pour émincer. L'outil de travail 30" est un outil pour réaliser des râpés fins. L'outil de travail 30'" est un outil grattoir prévu pour râper les aliments friables tels que par exemple le parmesan.

L'accessoire de travail 2 comportant le boîtier 20, l'un des outils de travail 30, 30', 30", 30'" rotatifs et l'insert 40 forme un dispositif de préparation d'aliments selon l'invention. Le boîtier 20 présente une cheminée 23 pour l'introduction des aliments à transformer. Le dispositif de préparation d'aliments selon l'invention comporte avantageusement le poussoir 24 pouvant être déplacé dans la cheminée 23 pour pousser les aliments vers l'outil de travail 30, 30', 30", 30'" monté dans le boîtier 20.

Le boîtier 20 définit un logement 21 présentant une ouverture de montage 22 pour la mise en place de l'un ou l'autre des outils de travail 30, 30', 30", 30'" dans le logement 21. La cheminée 23 communique avec le logement 21. Le poussoir 24 peut être déplacé dans la cheminée 23 pour pousser les aliments vers l'outil de travail 30, 30', 30", 30'" monté dans le logement 21.

Plus particulièrement dans l'exemple de réalisation illustré aux figures 1 à 3, le boîtier 20 porte un organe de transmission 25 monté libre en rotation. Tel que visible sur la figure 3, l'axe de rotation de l'organe de transmission 25 est incliné vers le bas. Cette disposition permet d'améliorer le caractère déversant des outils de travail 30, 30', 30", 30'" rotatifs. L'organe de transmission 25 est entraîné par la sortie d'entrainement 5 et vient en prise avec l'outil de travail 30, 30', 30", 30'" agencé dans le logement 21. L'organe de transmission 25 comporte une première extrémité 26 venant en prise avec la sortie d'entraînement 5. La première extrémité 26 est par exemple formée par un arbre de section hexagonale ou carrée. L'organe de transmission 25 comporte une deuxième extrémité 27 agencée dans le logement 21, prévue pour entraîner en rotation l'outil de travail 30, 30', 30", 30'" agencé dans le logement 21. La deuxième extrémité 27 comporte des ergots 28 pour retenir l'outil de travail 30, 30', 30", 30'" agencé dans le logement 21. Si désiré les ergots 28 peuvent former des crochets.

Tel que visible sur la figure 3, le logement 21 est déversant en direction de l'ouverture de montage 22. Le boîtier 20 présente une butée inférieure 29 pour retenir l'outil de travail 30 agencé dans le logement 21. La butée inférieure 29 est formée à proximité de l'ouverture de montage 22.

L'accessoire de travail 2 peut être monté sur la base motorisée 1, tel que représenté sur les figures 2 et 3. L'accessoire de travail 2 est alors solidaire de la base motorisée 1. L'accessoire de travail 2 comporte à cet effet des moyens de fixation 10 prévus pour venir en prise avec des moyens de fixation complémentaires 7 de la base motorisée 1.

Dans l'exemple de réalisation illustré sur les figures 1 à 3, les moyens de fixation 10 et les moyens de fixation complémentaires 7 sont des moyens de fixation à baïonnette. A titre de variante, d'autres moyens de fixation peuvent être utilisés, notamment une bague de verrouillage assemblée par vissage ou par baïonnette, ou encore des crochets de retenue.

Tel que représenté sur la figure 3, l'outil de travail 30 agencé dans le logement 21 du boîtier 20 monté sur la base motorisée 1 est entraîné en rotation.

Tel que représenté sur la figure 4, l'outil de travail 30 rotatif comporte une extrémité d'entraînement 31 et une paroi latérale 32 issue de l'extrémité d'entraînement 31. La paroi latérale 32 présente au moins un organe de fragmentation externe 33 adjacent à un passage traversant 35, mieux visibles sur la figure 5. La paroi latérale 32 présente une bordure circonférentielle 37 ménageant une ouverture frontale 36 pour l'évacuation des aliments transformés. L'outil de travail 30 présente une pluralité d'organes de fragmentation externes 33 présentant chacun un bord d'attaque proéminent 34. Les autres outils de travail 30', 30", 30'" présentent une construction similaire, mais diffèrent de l'outil de travail 30 par le nombre et/ou la forme des organes de fragmentation externes et des passages traversants adjacents.

Tel que visible sur la figure 3, la cheminée 23 débouche dans le logement 21 au moins partiellement en regard du ou de l'un au moins des organes de fragmentation externes 33. L'extrémité d'entraînement 31 de l'outil de travail 30 monté dans le logement 21 vient en prise avec l'organe de transmission 25 pour entraîner en rotation l'outil de travail 30. A cet effet l'extrémité d'entraînement 31 comporte un moyen d'accouplement et d'entrainement en rotation 38 venant en prise avec la deuxième extrémité 27 de l'organe de transmission 25.

Dans l'exemple de réalisation illustré sur la figure 4, les organes de fragmentation externes 33 sont répartis sur plusieurs lignes entre l'extrémité d'entraînement 31 et la bordure circonférentielle 37. Les organes de fragmentation externes 33 sont légèrement décalés d'une ligne à l'autre pour obtenir une abrasion plus régulière des aliments introduits dans la cheminée 23. Chaque bord d'attaque proéminent 34 s'élève à partir d'une partie postérieure du passage traversant 35 par rapport au sens de rotation de l'outil de travail 30.

Plus particulièrement dans l'exemple de réalisation illustré sur les figures, les bords d'attaque proéminents 34 présentent un sommet pointu 14, tel que mieux visible sur la figure 5. Les bords d'attaque proéminents 34 présentent une géométrie triangulaire. Tel que visible sur les figures 4 et 5, les organes de fragmentation externes 33 sont en surplomb par rapport aux passages traversants 35 adjacents. L'inclinaison des organes de fragmentation externes 33 par rapport à la paroi latérale 32 est de préférence comprise entre 45° et 90°. Chacun des bords d'attaque proéminents 34 présente une surface frontale plus réduite que la surface d'ouverture du passage traversant 35 adjacent.

Tel que visible sur la figure 6, l'outil de travail 30 comporte des protubérances internes 39 sur la face interne de la paroi latérale 32.

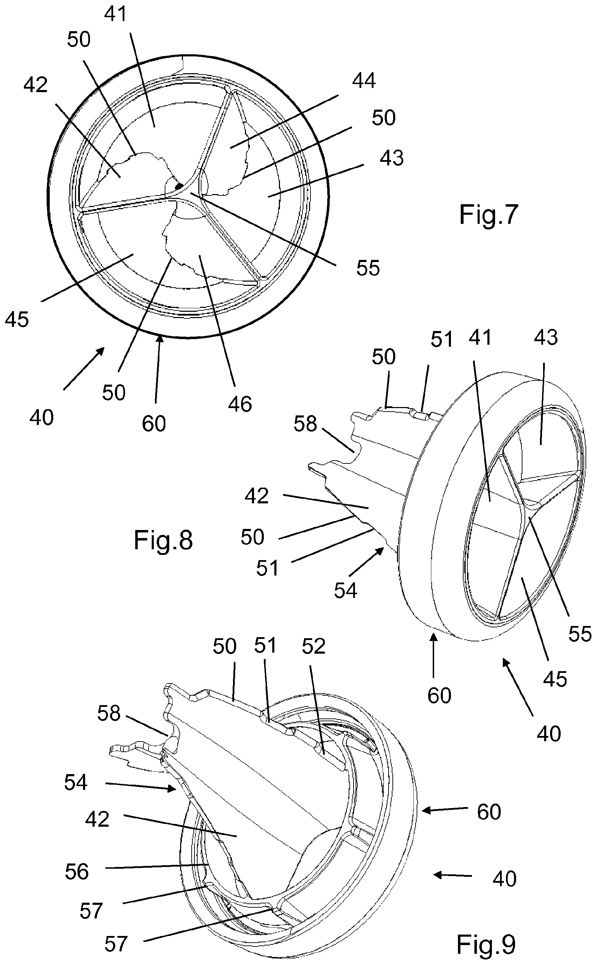

L'insert 40 illustré sur les figures 7 à 9 est prévu pour faciliter l'éjection des aliments transformés. Tel que visible sur la figure 3, l'insert 40 est monté sur le boîtier 20 et s'étend dans le logement 21. L'insert 40 s'étend alors au travers de l'ouverture frontale 36 de l'outil de travail 30. L'insert 40 s'étend à l'intérieur de la paroi latérale 32 de l'outil de travail 30.

L'insert 40 présente un passage d'évacuation 41 prolongé par une paroi déflectrice 42. L'insert 40 présente deux autres passages d'évacuation 43, 45 prolongés chacun par une autre paroi déflectrice 44, 46. Les parois déflectrices 42, 44, 46 conduisent ainsi à trois sorties distinctes de l'insert 40.

Dans l'exemple de réalisation illustré sur les figures, l'insert 40 comporte trois ouvertures d'évacuation agencées en étoile, formées par les passages d'évacuation 41, 43, 45.

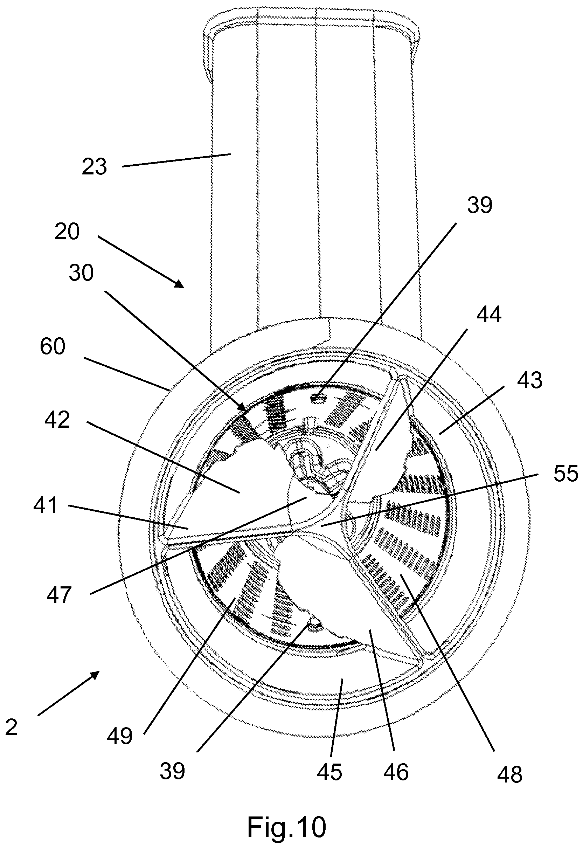

Tel que représenté sur les figures 3 et 10, la paroi déflectrice 42 et les autres parois déflectrices 44, 46 s'étendent à l'intérieur de la paroi latérale 32 de l'outil de travail 30 agencé dans le logement 21 lorsque l'insert 40 est monté sur le boîtier 20. La paroi déflectrice 42 et les autres parois déflectrices 44, 46 s'étendent à l'intérieur de la paroi latérale 32 sur au moins la moitié de la longueur de la paroi latérale 32. L'insert 40 s'étend ainsi à l'intérieur de la paroi latérale 32 sur au moins la moitié de la longueur de la paroi latérale 32.

Selon une disposition avantageuse, la paroi déflectrice 42 et les autres parois déflectrices 44, 46 sont vrillées dans le sens de rotation de l'outil de travail 30 en direction de l'ouverture frontale 36 de l'outil de travail 30.

La paroi déflectrice 42 et les autres parois déflectrices 44, 46 ménagent avec la paroi latérale 32 de l'outil de travail 30 plusieurs canaux d'évacuation 47, 48, 49 distincts débouchant chacun dans l'un des passages d'évacuation 41, 43, 45.

Pour une meilleure collecte des aliments transformés, la paroi déflectrice 42 et la ou les autres parois déflectrices 44, 46 s'étendent à l'intérieur de la paroi latérale 32 en dessous du débouché de la cheminée 23 dans le logement 21. Toutefois selon l'orientation de l'insert 40 dans le boîtier 20, seule l'une des parois déflectrices 42, 44, 46 ou seules certaines des parois déflectrices 42, 44, 46 sont agencées en regard du débouché de la cheminée 23 dans le logement 21. Tel que représenté sur les figures 3 et 10, la paroi déflectrice 42, 44, 46 est agencée en regard du débouché de la cheminée 23 dans le logement 21.

La paroi déflectrice 42 et les autres parois déflectrices 44, 46 présentent chacune un bord latéral 50. Lorsque l'insert 40 est en place dans le logement 21, chaque bord latéral 50 est adjacent à la paroi latérale 32 de l'outil de travail 30. Le jeu entre la paroi latérale 32 et les bords latéraux 50 est ainsi minimisé. Tel que mieux visible sur les figures 8 et 9, chaque bord latéral 50 présente au moins une échancrure 51, 52. Les échancrures 51 permettent le passage des protubérances internes 39 de la face interne de la paroi latérale 32 de l'outil de travail 30. Les échancrures 52 permettent le passage de la bordure circonférentielle 37 de l'outil de travail 30. Pour une meilleure évacuation des aliments transformés, chaque bord latéral 50 est fuyant en direction de l'ouverture frontale 36 de l'outil de travail 30 par rapport au sens de rotation de l'outil de travail 30.

L'insert 40 est porté par le boîtier 20. L'insert 40 comporte un corps principal 54 formant la paroi déflectrice 42 et les autres parois déflectrices 44, 46. Le corps principal 54 délimite le passage d'évacuation 41 et les autres passages d'évacuation 43, 45. Le corps principal 54 est avantageusement réalisé en matière plastique relativement rigide, par exemple en ABS.

L'insert 40 présente un noyau central 55 s'étendant selon l'axe de rotation de l'outil de travail 30. Le noyau central 55 appartient au corps principal 54. Le noyau central 55 s'étend selon l'axe de rotation de l'outil de travail 30. La paroi déflectrice 42 et les autres parois déflectrices 44, 46 s'étendent à partir du noyau central 55. Le noyau central 55 présente une échancrure axiale 58 prévue pour le passage de la deuxième extrémité 27 de l'organe de transmission 25.

L'insert 40 comporte une couronne interne 56 issue du corps principal 54. La couronne interne 56 présente une série de protubérances externes 57 prévues pour être insérées dans le logement 21. Les protubérances externes 57 permettent des appuis discrets en limitant les efforts de frottement lors de la mise en place ou du retrait de l'insert 40 par rapport au boîtier 20. Tel que visible sur la figure 3, la couronne interne 56 s'étendant à l'intérieur de l'ouverture de montage 22 lorsque l'insert 40 est monté sur le boîtier 20. La couronne interne 56 s'étend en regard de la bordure circonférentielle 37 de l'outil de travail 30 pour bien canaliser le flux d'aliments transformés à l'intérieur de l'outil de travail 30 et de la couronne interne 56 jusqu'au passage d'évacuation 41 et aux autres passages d'évacuation 43, 45.

L'insert 40 comporte une bordure annulaire 60 portée par le corps principal 54. Tel que visible sur la figure 3, la bordure annulaire 60 est montée autour de l'ouverture de montage 22 lorsque l'insert 40 est monté sur le boîtier 20. La bordure annulaire 60 s'étend autour du passage d'évacuation 41 et des autres passages d'évacuation 43, 45, tel que visible sur les figures 7 et 8. La bordure annulaire 60 s'étend autour de la couronne interne 56, tel que visible sur la figure 9. Selon une forme de réalisation avantageuse, la bordure annulaire 60 forme une couronne extérieure déformable élastiquement pour venir en prise sur le boîtier 20 autour de l'ouverture de montage 22. La bordure annulaire 60 présente à cet effet sur sa face interne une gorge interne 61 circonférentielle logeant au moins une protubérance externe 9 du boîtier 20. Tel que visible sur la figure 1, la protubérance externe 9 est une bordure circonférentielle. La protubérance externe 9 aussi est prévue pour le montage du capot de rangement 15. Le capot de rangement 15 présente une bordure circonférentielle 16. La bordure circonférentielle 16 peut également être logée dans la gorge interne 61 de la bordure annulaire 60. Ainsi l'insert 40 peut également être monté sur le capot de rangement 15. La bordure annulaire 60 est par exemple réalisée en matériau élastomère surmoulé sur le corps principal 54.

Le dispositif de préparation d'aliments selon l'invention illustré sur les figures 1 à 10 fonctionne et s'utilise de la manière suivante.

L'utilisateur monte le boîtier 20 sur la base motorisée 1 et sélectionne l'un des outils de travail 30, 30', 30", 30'" pour le mettre en place dans le logement 21 du boîtier 20, de préférence l'outil de travail 30. L'extrémité d'entraînement 31 de l'outil de travail 30 monté dans le logement 21 vient en prise avec l'organe de transmission 25 pour entraîner en rotation l'outil de travail 30. L'utilisateur met ensuite en place l'insert 40 sur le boîtier 20 en engageant la bordure annulaire 60 sur la protubérance externe 9 du boîtier 20. Selon l'orientation de l'insert 40 par rapport au boîtier 20, un seul des canaux d'évacuation 47, 48, 49 est agencé en regard du débouché de la cheminée 23 dans le logement 21, tel que représenté notamment sur la configuration illustrée sur la figure 10. Toutefois en fonction de la configuration de l'insert 40, plusieurs canaux d'évacuation 47, 48, 49 peuvent être agencés en regard du débouché de la cheminée 23 dans le logement 21. L'utilisateur peut mettre en marche le dispositif de préparation d'aliments en actionnant le dispositif de commande 4. L'outil de travail 30 est de préférence entrainé à des vitesses de rotation comprises entre 100 et 200 t /min, pour obtenir un débit suffisant, sans que les aliments soient plaqués dans le logement 21 entre la paroi latérale 32 et le boîtier 20.

Le dispositif de préparation d'aliments selon l'invention peut être utilisé pour réaliser différents types de préparations, notamment de la purée à partir de pommes de terres cuites ; mais aussi des préparations pour apéritif par exemple à partir de tomates, de poivrons, ou encore de chair d'avocat, mais aussi à partir de pois chiches pour faire de l'houmous, à partir d'olives, de câpres et d'anchois pour faire de la tapenade, à partir de roquefort, de beurre et de noix pour faire une crème de fromage à tartiner ; des petits pots pour bébés à partir de patates douces ou de potimarron ; des purées de fruits, notamment de bananes.

L'utilisateur introduit les aliments choisis dans la cheminée 23 et les pousse vers l'outil de travail 30 avec le poussoir 24. Les aliments sont d'abord fragmentés progressivement par l'outil de travail 30. La majeure partie des aliments fragmentés est alors recueillie à l'intérieur de la paroi latérale 32. Selon l'orientation de l'insert 40, les aliments fragmentés rencontrent une ou plusieurs des parois déflectrices 42, 44, 46. La rotation de l'outil de travail 30 conjuguée au profil des parois déflectrices 42, 44, 46 favorise la progression des aliments fragmentés vers les passages d'évacuation 41, 43, 45. Dans l'exemple de réalisation illustré sur les figures selon l'orientation de l'insert, les aliments fragmentés sont recueillis principalement dans un ou deux des canaux d'évacuation 47, 48, 49. Tel que représenté sur la figure 3, les aliments fragmentés sont recueillis principalement dans le canal d'évacuation 47 supérieur. La couronne interne 56 s'étendant en regard de la bordure circonférentielle 37 de l'outil de travail 30 permet d'éviter les infiltrations d'aliments fragmentés à l'extérieur de l'outil de travail 30. La section des canaux d'évacuation 47, 48, 49 réduite par rapport à la section de la cheminée 23 permet de favoriser l'expulsion des aliments fragmentés. Le flux d'aliments fragmentés peut ainsi s'écouler vers les passages d'évacuation 41, 43, 45 en minimisant les quantités d'aliments fragmentés retenus à l'intérieur du logement 21.

Lorsque la préparation est terminée, l'utilisateur peut arrêter l'appareil et démonter l'insert 40, l'outil de travail 30 et le boîtier 20 pour les nettoyer.

Le dispositif de préparation d'aliments selon l'invention est ainsi particulièrement simple à utiliser. Du fait des surfaces réduites par rapport à celles d'un presse-purée traditionnel, les quantités d'aliments restant sur les surfaces du dispositif de préparation d'aliments selon l'invention sont réduites. De plus les aliments peuvent être d'abord écrasés dans la cheminée 23 puis sont fragmentés en un seul passage à travers l'outil de travail 30. L'outil de travail 30 permet de débiter progressivement les aliments. Les bords d'attaque proéminents 34 incisent les aliments et propulsent les fragments au travers des passages traversants 35. Au contraire, dans les presse-purée traditionnels, les aliments sont soumis à un malaxage sous l'action de la vis de pressage pour passer à travers la grille. Un tel procédé présente l'inconvénient de faire ressortir l'amidon des pommes de terre cuites, ce qui tend à rendre plus collantes les purées ainsi obtenues.

A titre de variante, les outils de travail 30, 30', 30", 30'" rotatifs de type tambour ne sont pas nécessairement tronconiques, mais peuvent notamment être cylindriques.

A titre de variante, l'accessoire de travail 2 peut comporter un seul outil de travail 30, 30', 30", 30'" rotatif.

A titre de variante, les organes de fragmentation externes 33 de l'outil de travail 30 ne sont pas nécessairement alignés.

A titre de variante, l'insert 40 peut s'étendre jusqu'à une paroi de fond de l'outil de travail 30, si désiré en entourant le moyen d'accouplement et d'entrainement en rotation 38 de l'outil de travail 30.

A titre de variante, l'insert 40 ne présente pas nécessairement une bordure annulaire 60 circulaire autorisant une orientation libre de l'insert 40 par rapport au boîtier 20. L'insert 40 peut notamment être monté sur le boîtier 20 selon une ou plusieurs positions définies.

A titre de variante, les passages d'évacuation 41, 43, 45 ne sont pas nécessairement agencés de manière symétrique.

A titre de variante, les passages d'évacuation 41, 43, 45 ne présentent pas nécessairement la même section.

A titre de variante, l'insert 40 peut présenter au moins un autre passage d'évacuation 43, 45, chaque autre passage d'évacuation 43, 45 étant prolongé par une autre paroi déflectrice 44, 46 s'étendant à l'intérieur de la paroi latérale 32.

A titre de variante, l'insert 40 peut ne présenter qu'un seul passage d'évacuation 41 prolongé par une paroi déflectrice 42 s'étendant à l'intérieur de la paroi latérale 32. L'insert 40 ménage alors avec l'outil de travail 30 un canal d'évacuation 47 débouchant par l'ouverture de montage 22. Les ouvertures correspondant aux autres passages d'évacuation 43, 45 de l'exemple de réalisation précédent peuvent par exemple être obturées. La paroi déflectrice 44 de l'exemple de réalisation précédent n'a alors plus une fonction déflectrice. Cette paroi peut être conservée ou être remplacée par une autre paroi radiale. La paroi déflectrice 46 de l'exemple de réalisation précédent n'a plus non plus une fonction déflectrice. Cette paroi peut être conservée, remplacée ou supprimée. Il convient alors de positionner correctement l'insert 40 ainsi modifié sur le boîtier 20 pour que la paroi déflectrice 42 soit agencée au dessous du débouché de la cheminée 23 et que le canal d'évacuation 47 s'étende en dessous du débouché de la cheminée 23. Avantageusement alors la section minimale du canal d'évacuation 47 est inférieure à la section de la cheminée 23. Avantageusement encore, la paroi déflectrice 42 est vrillée dans le sens de rotation de l'outil de travail 30 en direction de l'ouverture frontale 36. Si désiré, une paroi périphérique peut être prévue pour relier cette paroi à la paroi déflectrice 42 afin de limiter l'espace libre entre l'insert 40 et la paroi latérale 32 de l'outil de travail 30.

A titre de variante, l'insert 40 peut présenter au moins un passage d'évacuation 41 prolongé par une paroi déflectrice 42 s'étendant à l'intérieur de la paroi latérale 32. L'insert 40 ménage alors avec l'outil de travail 30 au moins un canal d'évacuation 47, 48, 49 débouchant par l'ouverture de montage 22. La section minimale du ou d'au moins un des canaux d'évacuation 47 ; 48 ; 49 peut alors être inférieure à la section de la cheminée 23. Les sections minimales des canaux d'évacuation 47 ; 48 ; 49 ne sont pas nécessairement identiques. Le nombre de canaux d'évacuation 47 ; 48 ; 49 est de préférence compris entre un et six. Ainsi les aliments transformés par l'outil de travail 30 sont de préférence évacués principalement par un à trois canaux d'évacuation 47 ; 48 ; 49.

A titre de variante, l'accessoire de travail 2 n'est pas nécessairement amovible par rapport au boîtier 1.

La présente invention n'est nullement limitée aux exemples de réalisation décrits, mais englobe de nombreuses modifications dans le cadre des revendications.

## Revendications

1. Dispositif de préparation d'aliments comprenant :
- un outil de travail (30) rotatif comportant une extrémité d'entraînement (31) et une paroi latérale (32) issue de l'extrémité d'entraînement (31), la paroi latérale (32) présentant au moins un organe de fragmentation externe (33) adjacent à un passage traversant (35), la paroi latérale (32) présentant une bordure circonférentielle (37) ménageant une ouverture frontale (36) pour l'évacuation des aliments transformés,
- un boîtier (20) définissant un logement (21) présentant une ouverture de montage (22) pour la mise en place de l'outil de travail (30) dans le logement (21), le boîtier (20) présentant une cheminée (23) pour l'introduction des aliments à transformer, la cheminée (23) débouchant dans le logement (21) au moins partiellement en regard du ou de l'un au moins des organes de fragmentation externes (33),
- un insert (40) porté par le boîtier (20), l'insert (40) présentant un passage d'évacuation (41) prolongé par une paroi déflectrice (42) s'étendant à l'intérieur de la paroi latérale (32),
**caractérisé en ce que** l'insert (40) présente au moins un autre passage d'évacuation (43 ; 45) prolongé par une autre paroi déflectrice (44 ; 46) s'étendant à l'intérieur de la paroi latérale (32).

2. Dispositif de préparation d'aliments selon la revendication 1, **caractérisé en ce que** la paroi déflectrice (42) et la ou les autres parois déflectrices (44 ; 46) ménagent avec la paroi latérale (32) plusieurs canaux d'évacuation (47 ; 48 ; 49) distincts débouchant chacun dans l'un des passages d'évacuation (41 ; 43 ; 45).

3. Dispositif de préparation d'aliments selon l'une des revendications 1 ou 2, **caractérisé en ce que** l'insert (40) présente un noyau central (55) s'étendant selon l'axe de rotation de l'outil de travail (30), à partir duquel s'étendent la paroi déflectrice (42) et la ou les autres parois déflectrices (44 ; 46).

4. Dispositif de préparation d'aliments selon l'une des revendications 1 à 3, **caractérisé en ce que** la paroi déflectrice (42) et la ou les autres parois déflectrices (44 ; 46) sont vrillées dans le sens de rotation de l'outil de travail (30) en direction de l'ouverture frontale (36).

5. Dispositif de préparation d'aliments selon l'une des revendications 1 à 4, **caractérisé en ce que** la paroi déflectrice (42) s'étend à l'intérieur de la paroi latérale (32) en dessous du débouché de la cheminée (23) dans le logement (21).

6. Dispositif de préparation d'aliments selon l'une des revendications 1 à 5, **caractérisé en ce que** la paroi déflectrice (42) présente un bord latéral (50) adjacent à la paroi latérale (32).

7. Dispositif de préparation d'aliments selon la revendication 6, **caractérisé en ce que** le bord latéral (50) est fuyant en direction de l'ouverture frontale (36) par rapport au sens de rotation de l'outil de travail (30).

8. Dispositif de préparation d'aliments selon l'une des revendications 6 ou 7, **caractérisé en ce que** le bord latéral (50) présente au moins une échancrure (51 ; 52).

9. Dispositif de préparation d'aliments selon l'une des revendications 1 à 8, **caractérisé en ce que** l'insert (40) comporte une bordure annulaire (60) montée autour de l'ouverture de montage (22).

10. Dispositif de préparation d'aliments selon la revendication 9, **caractérisé en ce que** la bordure annulaire (60) forme une couronne extérieure déformable élastiquement pour venir en prise sur le boîtier (20) autour de l'ouverture de montage (22).

11. Dispositif de préparation d'aliments selon l'une des revendications 1 à 10, **caractérisé en ce que** l'insert (40) comporte une couronne interne (56) s'étendant à l'intérieur de l'ouverture de montage (22).

12. Dispositif de préparation d'aliments selon la revendication 11, **caractérisé en ce que** la couronne interne (56) s'étend en regard de la bordure circonférentielle (37).

13. Dispositif de préparation d'aliments selon l'une des revendications 1 à 12, **caractérisé en ce que** l'outil de travail (30) rotatif est tronconique.

14. Dispositif de préparation d'aliments selon l'une des revendications 1 à 13, **caractérisé en ce que** l'outil de travail (30) présente une pluralité d'organes de fragmentation externes (33) présentant chacun un bord d'attaque proéminent (34) s'élevant à partir d'une partie postérieure du passage traversant (35) par rapport au sens de rotation de l'outil de travail (30).

15. Dispositif de préparation d'aliments selon l'une des revendications 1 à 14, **caractérisé en ce qu'**il comporte un poussoir (24) pouvant être déplacé dans la cheminée (23) pour pousser les aliments vers l'outil de travail (30).

16. Dispositif de préparation d'aliments selon l'une des revendications 1 à 15, **caractérisé en ce que** le boîtier (20) porte un organe de transmission (25) monté libre en rotation et **en ce que** l'extrémité d'entraînement (31) de l'outil de travail (30) monté dans le logement (21) vient en prise avec l'organe de transmission (25) pour entraîner en rotation l'outil de travail (30).

17. Appareil électroménager de préparation d'aliments comprenant une base motorisée (1) et un accessoire de travail (2) solidaire de la base motorisée (1), l'accessoire de travail (2) comportant :
- un outil de travail (30) rotatif comportant une extrémité d'entraînement (31) et une paroi latérale (32) issue de l'extrémité d'entraînement (31), la paroi latérale (32) présentant au moins un organe de fragmentation externe (33) adjacent à un passage traversant (35), la paroi latérale (32) présentant une bordure circonférentielle (37) ménageant une ouverture frontale (36) pour l'évacuation des aliments transformés,
- un boîtier (20) définissant un logement (21) présentant une ouverture de montage (22) pour la mise en place de l'outil de travail (30) dans le logement (21), le boîtier (20) présentant une cheminée (23) pour l'introduction des aliments à transformer, la cheminée (23) débouchant dans le logement (21) au moins partiellement en regard du ou de l'un au moins des organes de fragmentation externes (33),
- un insert (40) porté par le boîtier (20), l'insert (40) présentant un passage d'évacuation (41) prolongé par une paroi déflectrice (42) s'étendant à l'intérieur de la paroi latérale (32),
**caractérisé en ce que** l'accessoire de travail (2) forme un dispositif de préparation d'aliments selon l'une des revendications 1 à 16.

## Patentansprüche

1. Vorrichtung zur Zubereitung von Nahrungsmitteln, umfassend:
- ein rotierendes Arbeitswerkzeug (30), das ein Antriebsende (31) und eine Seitenwand (32) aufweist, die von dem Antriebsende (31) ausgeht, wobei die Seitenwand (32) mindestens ein äußeres Fragmentierungsorgan (33) aufweist, das an einem Durchgangskanal (35) angrenzt, wobei die Seitenwand (32) eine umlaufende Kante (37) aufweist, in der eine vordere Öffnung (36) zur Ausleitung der verarbeiteten Lebensmittel ausgebildet ist,
- ein Gehäuse (20), das eine Aufnahme (21), die eine Befestigungsöffnung (22) aufweist, zur Anbringung des Arbeitswerkzeugs (30) in der Aufnahme (21) definiert, wobei das Gehäuse (20) einen Schacht (23) zur Einführung der zu verarbeitenden Nahrungsmittel aufweist, wobei der Schacht (23) in der Aufnahme (21) zumindest teilweise gegenüber dem oder mindestens einem der äußeren Fragmentierungsorgane (33) mündet,
- einen Einsatz (40), der von dem Gehäuse (20) getragen wird, wobei der Einsatz (40) einen Evakuierungsdurchgang (41) aufweist, der durch eine Ablenkwand (42) verlängert ist, die sich innerhalb der Seitenwand (32) erstreckt, **dadurch gekennzeichnet, dass** der Einsatz (40) mindestens einen weiteren Auslassdurchgang (43; 45) aufweist, der durch eine weitere Umlenkwand (44; 46) verlängert ist, die sich innerhalb der Seitenwand (32) erstreckt.

2. Vorrichtung zur Zubereitung von Nahrungsmitteln nach Anspruch 1, **dadurch gekennzeichnet, dass** in der Umlenkwand (42) und der weiteren Umlenkwand oder den weiteren Umlenkwänden (44; 46) mit der Seitenwand (32) mehrere unterschiedliche Auslasskanäle (47; 48; 49) ausgebildet sind, die jeweils in einen der Auslasskanäle (41; 43; 45) münden.

3. Vorrichtung zur Zubereitung von Nahrungsmitteln nach einem der Ansprüche 1 oder 2, **dadurch gekennzeichnet, dass** der Einsatz (40) einen zentralen Kern (55) aufweist, der sich entlang der Rotationsachse des Arbeitswerkzeugs (30) erstreckt, von dem sich die Umlenkwand (42) und die weitere Umlenkwand oder weiteren Umlenkwände (44; 46) erstrecken.

4. Vorrichtung zur Zubereitung von Nahrungsmitteln nach einem der Ansprüche 1 bis 3, **dadurch gekennzeichnet, dass** die Umlenkwand (42) und die weitere Umlenkwand oder weiteren Umlenkwände (44; 46) in der Drehrichtung des Arbeitswerkzeugs (30) in Richtung der vorderen Öffnung (36) verdreht sind.

5. Vorrichtung zur Zubereitung von Nahrungsmitteln nach einem der Ansprüche 1 bis 4, **dadurch gekennzeichnet, dass** sich die Umlenkwand (42) innerhalb der Seitenwand (32) unterhalb der Mündung des Schachts (23) in der Aufnahme (21) erstreckt.

6. Vorrichtung zur Zubereitung von Nahrungsmitteln nach einem der Ansprüche 1 bis 5, **dadurch gekennzeichnet, dass** die Umlenkwand (42) eine der Seitenwand (32) benachbarte Seitenkante (50) aufweist.

7. Vorrichtung zur Zubereitung von Nahrungsmitteln nach Anspruch 6, **dadurch gekennzeichnet, dass** die Seitenkante (50) in der Richtung der vorderen Öffnung (36) in Bezug auf die Drehrichtung des Arbeitswerkzeugs (30) läuft.

8. Vorrichtung zur Zubereitung von Nahrungsmitteln nach einem der Ansprüche 6 oder 7, **dadurch gekennzeichnet, dass** die Seitenkante (50) mindestens eine Einbuchtung (51; 52) aufweist.

9. Vorrichtung zur Zubereitung von Nahrungsmitteln nach einem der Ansprüche 1 bis 8, **dadurch gekennzeichnet, dass** der Einsatz (40) einen ringförmigen Rand (60) aufweist, der um die Montageöffnung (22) herum angebracht ist.

10. Vorrichtung zur Zubereitung von Nahrungsmitteln nach Anspruch 9, **dadurch gekennzeichnet, dass** die ringförmige Kante (60) einen elastisch verformbaren äußeren Ring zum Eingreifen in das Gehäuse (20) um die Montageöffnung (22) bildet.

11. Vorrichtung zur Zubereitung von Nahrungsmitteln nach einem der Ansprüche 1 bis 10, **dadurch gekennzeichnet, dass** der Einsatz (40) einen Innenring (56) aufweist, der sich innerhalb der Montageöffnung (22) erstreckt.

12. Vorrichtung zur Zubereitung von Nahrungsmitteln nach Anspruch 11, **dadurch gekennzeichnet, dass** sich der Innenring (56) gegenüber der umlaufenden Kante (37) erstreckt.

13. Vorrichtung zur Zubereitung von Nahrungsmitteln nach einem der Ansprüche 1 bis 12, **dadurch gekennzeichnet, dass** das rotierende Arbeitswerkzeug (30) kegelstumpfförmig ist.

14. Vorrichtung zur Zubereitung von Nahrungsmitteln nach einem der Ansprüche 1 bis 13, **dadurch gekennzeichnet, dass** das Arbeitswerkzeug (30) mehrere äußere Fragmentierungsorgane (33) aufweist, die jeweils eine hervorstehende Vorderkante (34) aufweisen, die von einem hinteren Abschnitt des Durchgangskanals (35) relativ zu der Drehrichtung des Arbeitswerkzeugs (30) ansteigt.

15. Vorrichtung zur Zubereitung von Nahrungsmitteln nach einem der Ansprüche 1 bis 14, **dadurch gekennzeichnet, dass** sie einen Schieber (24) aufweist, der in dem Schacht (23) verschoben werden kann, um die Nahrungsmittel zu dem Arbeitswerkzeug (30) zu drücken.

16. Vorrichtung zur Zubereitung von Nahrungsmitteln nach einem der Ansprüche 1 bis 15, **dadurch gekennzeichnet, dass** das Gehäuse (20) ein frei drehbar angebrachtes Übertragungsorgan (25) trägt, und dass das Antriebsende (31) des Arbeitswerkzeugs (30), das in der Aufnahme (21) angebracht ist, mit dem Übertragungsorgan (25) in Eingriff steht, um das Arbeitswerkzeug (30) in Drehung zu versetzen.

17. Elektrisches Haushaltsgerät zur Zubereitung von Nahrungsmitteln, umfassend eine motorisierte Basis (1) und ein mit der motorisierten Basis (1) fest verbundenes Arbeitszubehör (2), wobei das Arbeitszubehör (2) aufweist:
- ein rotierendes Arbeitswerkzeug (30), das ein Antriebsende (31) und eine Seitenwand (32) aufweist, die von dem Antriebsende (31) ausgeht, wobei die Seitenwand (32) mindestens ein äußeres Fragmentierungsorgan (33) aufweist, das an einem Durchgangskanal (35) angrenzt, wobei die Seitenwand (32) eine umlaufende Kante (37) aufweist, in der eine vordere Öffnung (36) zur Ausleitung der verarbeiteten Lebensmittel ausgebildet ist,
- ein Gehäuse (20), das eine Aufnahme (21), die eine Befestigungsöffnung (22) aufweist, zur Anbringung des Arbeitswerkzeugs (30) in der Aufnahme (21) definiert, wobei das Gehäuse (20) einen Schacht (23) zur Einführung der zu verarbeitenden Nahrungsmittel aufweist, wobei der Schacht (23) in der Aufnahme (21) zumindest teilweise gegenüber dem oder mindestens einem der äußeren Fragmentierungsorgane (33) mündet,
- einen Einsatz (40), der von dem Gehäuse (20) getragen wird, wobei der Einsatz (40) einen Evakuierungsdurchgang (41) aufweist, der durch eine Ablenkwand (42) verlängert ist, die sich innerhalb der Seitenwand (32) erstreckt, **dadurch gekennzeichnet, dass** das Arbeitszubehör (2) eine Vorrichtung zur Zubereitung von Nahrungsmitteln nach einem der Ansprüche 1 bis 16 bildet.

## Claims

1. Device for preparing food comprising:
- a rotating work tool (30) comprising a drive end (31) and a side wall (32) coming from the drive end (31), the side wall (32) having at least one outer fragmentation member (33) adjacent to a through passage (35), the side wall (32) having a circumferential edge (37) conserving a front opening (36) for the release of transformed food,
- a casing (20) defining a housing (21) having a mount opening (22) for the implementation of the work tool (30) in the housing (21), the casing (20) having a funnel (23) for inserting food to be transformed, the funnel (23) leading to the housing (21) at least partially opposite the at least one of the outer fragmentation members (33),
- an insert (40) supported by the casing (20), the insert (40) having a release passage (41) extended by a baffle wall (42) extending inside the side wall (32), **characterised in that** the insert (40) has at least one other release passage (43; 45) extended by another baffle wall (44; 46) extending inside the side wall (32).

2. Device for preparing food according to claim 1, **characterised in that** the baffle wall (42) and the other baffle wall(s) (44; 46) conserve with the side wall (32), several separate release channels (47; 48; 49), each leading to one of the release passages (41; 43; 45).

3. Device for preparing food according to one of claims 1 or 2, **characterised in that** the insert (40) has a central core (55) extending along the rotation axis of the work tool (30), from which the baffle wall (42) and/or the other baffle walls (44; 46) extend(s).

4. Device for preparing food according to one of claims 1 to 3, **characterised in that** the baffle wall (42) and/or the other baffle wall(s) (44; 46) are spiralled in the rotation direction of the work tool (30) in the direction of the front opening (36).

5. Device for preparing food according to one of claims 1 to 4, **characterised in that** the baffle wall (42) extends inside the side wall (32) below the outlet of the funnel (23) in the housing (21).

6. Device for preparing food according to one of claims 1 to 5, **characterised in that** the baffle wall (42) has a side edge (50) adjacent to the side wall (32).

7. Device for preparing food according to claim 6, **characterised in that** the side edge (50) recedes in the direction of the front opening (36) in relation to the rotation direction of the work tool (30).

8. Device for preparing food according to one of claims 6 or 7, **characterised in that** the side edge (50) has at least one indentation (51; 52).

9. Device for preparing food according to one of claims 1 to 8, **characterised in that** the insert (40) comprises an annular edge (60) mounted around the mount opening (22).

10. Device for preparing food according to claim 9, **characterised in that** the annular edge (60) forms an outer crown that can be deformed elastically to grip onto the casing (20) around the mount opening (22).

11. Device for preparing food according to one of claims 1 to 10, **characterised in that** the insert (40) comprises an inner crown (56) extending inside the mount opening (22).

12. Device for preparing food according to claim 11, **characterised in that** the inner crown (56) extends opposite the circumferential edge (37).

13. Device for preparing food according to one of claims 1 to 12, **characterised in that** the rotating work tool (30) is truncated.

14. Device for preparing food according to one of claims 1 to 13, **characterised in that** the work tool (30) has a plurality of outer fragmentation members (33) each having a protruding leading edge (34) lifting from a rear part of the through passage (35) in relation to the rotation direction of the work tool (30).

15. Device for preparing food according to one of claims 1 to 14, **characterised in that** it comprises a push-button (24) which could be moved in the funnel (23) to push food towards the work tool (30).

16. Device for preparing food according to one of claims 1 to 15, **characterised in that** the casing (20) supports a transmission member (25) mounted free in rotation and **in that** the drive end (31) of the work tool (30) mounted in the housing (21) grips with the transmission member (25) to drive in rotation the work tool (30).

17. Household appliance for preparing food comprising a motorised base (1) and a work accessory (2) secured to the motorised base (1), the work accessory (2) comprising:
- a rotating work tool (30) comprising a drive end (31) and a side wall (32) coming from the drive end (31), the side wall (32) having at least one outer fragmentation member (33) adjacent to a through passage (35), the side wall (32) having a circumferential edge (37) conserving a front opening (36) for the release of transformed food,
- a casing (20) defining a housing (21) having a mount opening (22) for the implementation of the work tool (30) in the housing (21), the casing (20) having a funnel (23) for inserting food to be transformed, the funnel (23) leading to the housing (21) at least partially opposite the at least one of the outer fragmentation members (33),
- an insert (40) supported by the casing (20), the insert (40) having a release passage (41) extended by a baffle wall (42) extending inside the side wall (32), **characterised in that** the work accessory (2) forms a device for preparing food according to one of claims 1 to 16.
